# EUROPÄISCHE PATENTANMELDUNG

(11) **EP 2 631 601 A1**
(43) Veröffentlichungstag der Anmeldung: **28.08.2013**
(21) Anmeldenummer: 12001207.5
(22) Anmeldetag: 23.02.2012
(51) Int. Cl.: G01D 5/14, G01D 5/244

(54) **Encoderring**

(71) Anmelder: Carl Freudenberg KG, 69469 Weinheim (DE)
(72) Erfinder: Heiland, Marc, Dr., 67549 Worms (DE)

(57) **Zusammenfassung**

Ein Ring (1,1'") zur Anordnung auf einem um eine Achse (7) rotierbaren Element, umfassend einen Tragkörper (2,2'"), welcher einen Zentraldurchgang (3, 3"') umfängt, wobei der Tragkörper (2,2'") mit einem Feldkörper (4, 4"') verbunden ist und wobei der Feldkörper (4,4'") einzelne magnetisierte Bereiche (5, 5"') aufweist, die gemeinsam ein magnetisches Feld erzeugen, ist im Hinblick auf die Aufgabe, einen Ring der eingangs genannten Art derart auszugestalten und weiter zu bilden, dass dessen magnetische Signalstärke an die Leseposition des ihm zugeordneten Sensors anpassbar ist, dadurch gekennzeichnet, dass die einzelnen Bereiche (5, 5'") derart magnetisiert sind, dass sich die Richtung (6, 6"') ihrer jeweiligen Magnetisierung in radialer oder in axialer Richtung ändert.

## Beschreibung

### Technisches Gebiet

Die Erfindung betrifft einen Ring nach dem Oberbegriff des Patentanspruchs 1.

### Stand der Technik

Ringe der eingangs genannten Art, sogenannte Encoderringe, sind aus dem Stand der Technik, beispielsweise aus der EP 1 674 831 A1, bereits bekannt.

Während der Rotation einer Welle können über eine bestimmte Magnetisierung eines Rings die Drehzahl und ein Referenzpunkt der Welle erfasst werden.

Üblicherweise trägt ein Tragkörper eines Rings einen Feldkörper, welcher einzelne magnetische Bereiche aufweist. Ein gängiger Feldkörper besteht aus einem Elastomer, in welchem hartmagnetische Partikel aufgenommen sind.

Durch ein äußeres Magnetfeld werden die hartmagnetischen Partikel magnetisiert, so dass der Feldkörper in seiner Gesamtheit ein magnetisches Feld erzeugt.

Dieses magnetische Feld liefert Signale, die von einem Sensor erfasst werden können.

Ein Sensor ist üblicherweise vom Ring axial beabstandet angeordnet. Der Sensor liegt dabei dem Feldkörper axial gegenüber. Der Sensor wird in einem so genannten Leseabstand vom Ring bzw. Feldkörper positioniert.

An diesem Leseabstand können mehrere Sensoren angeordnet werden, die in radialer Richtung zueinander beabstandet sind, jedoch zum Ring bzw. zum Feldkörper einen konstanten axialen Leseabstand einhalten.

Insoweit befindet sich jeder der Sensoren in einer bestimmten Leseposition, die durch einen radialen Abstand von einer Achse und einen axialen Leseabstand vom Ring bzw. Feldkörper bestimmt ist.

In der Praxis ist es häufig nicht möglich, eine Vielzahl von Sensoren anzuordnen, sondern möglicherweise nur einen einzigen Sensor.

Des Weiteren kann die Leseposition, d. h. der axiale Leseabstand zum Ring und der radiale Abstand zur Achse, aus konstruktiven Gründen festgelegt sein.

Da ein Sensor nur eine bestimmte Empfindlichkeit aufweist, ist es erforderlich, in der Leseposition des Sensors ein möglichst starkes magnetisches Signal zu erzeugen.

Dies ist mit den bisher bekannten Ringen nicht in zufrieden stellendem Maß möglich.

Des Weiteren wird zur Einsparung von Kosten angestrebt, die Menge des verwendeten magnetischen Materials zu reduzieren.

### Darstellung der Erfindung

Der Erfindung liegt daher die Aufgabe zugrunde, einen Ring der eingangs genannten Art derart auszugestalten und weiter zu bilden, dass dessen magnetische Signalstärke an die Leseposition des ihm zugeordneten Sensors anpassbar ist.

Die vorliegende Erfindung löst die zuvor genannte Aufgabe durch die Merkmale des Patentanspruchs 1.

Ein erfindungsgemäßer Ring zur Anordnung auf einem um eine Achse rotierbaren Element umfasst einen Tragkörper, welcher einen Zentraldurchgang umfängt, wobei der Tragkörper mit einem Feldkörper verbunden ist und wobei der Feldkörper einzelne magnetisierte Bereiche aufweist, die gemeinsam ein magnetisches Feld erzeugen.

Erfindungsgemäß ist es vorgesehen, dass die einzelnen Bereiche derart magnetisiert sind, dass sich die Richtung ihrer jeweiligen Magnetisierung in radialer oder in axialer Richtung ändert.

Erfindungsgemäß ist erkannt worden, dass Ringe des Stands der Technik derart magnetisiert sind, dass eine besondere Magnetisierungsrichtung auftritt. In Bereichen auf unterschiedlichen Radien ist die Magnetisierungsrichtung aber gerade nicht derart orientiert, dass deren Feldlinien parallel in einen Sensor einlaufen. Daher ist deren Beitrag zur Feldstärke nicht optimal.

Darauf ist erkannt worden, dass die Richtungen der Magnetisierung derart geändert werden können, dass Stellen maximaler Signalintensität frei wählbar und einstellbar sind.

Dabei ist konkret erkannt worden, dass eine Änderung der Richtungen der jeweiligen Magnetisierungen in radialer oder in axialer Richtung zu einer Fokussierung von magnetischen Feldlinien an bestimmten Stellen führt.

Diese Fokussierung erzeugt an diesen Stellen eine besonders hohe magnetische Signalintensität. An diesen Stellen kann ein Sensor besonders klar und deutlich magnetische Signale erfassen und detektieren.

Insoweit ist ein Ring angegeben, dessen Magnetfeldcharakteristik an unterschiedliche bauliche Gegebenheiten anpassbar ist.

Folglich ist die eingangs genannte Aufgabe gelöst.

Jede Richtung eines Bereichs könnte je einen Winkel mit einer orthogonal zu einer Ringebene orientierten Achse einschließen. Durch diese konkrete Ausgestaltung werden die Feldlinien derart ausgerichtet, dass sie sich an bestimmten Stellen verstärken und zu einer großen Signalintensität des magnetischen Feldes kombinieren.

Vor diesem Hintergrund könnten zwei in radialer oder in axialer Richtung einander folgende Bereiche Richtungen der Magnetisierung aufweisen, die unterschiedliche Winkel mit einer orthogonal zu einer Ringebene orientierten Achse einschließen. Durch diese konkrete Ausgestaltung ist sicher gestellt, dass die Richtungen der Magnetisierungen sich kontinuierlich oder schrittweise in radialer oder in axialer Richtung ändern bzw. relativ zu einer Achse, insbesondere einer Drehachse neigen.

Die Änderung der Winkel in radialer Richtung könnte zwischen 5° und 60° pro mm betragen. Durch diese konkrete Ausgestaltung wird ein Drehwinkelgradient geschaffen, der sicher stellt, dass die Richtungen der einzelnen Magnetisierungen mit zunehmendem radialen oder axialen Abstand von einem Referenzpunkt mehr und mehr relativ zu einer Achse geneigt werden. Es hat sich heraus gestellt, dass ein Drehwinkelgradient in Abhängigkeit von der Leseposition eines Sensors sowie in Abhängigkeit vom Material des Tragkörpers gewählt werden muss.

Vor diesem Hintergrund könnte die Änderung der Winkel in radialer Richtung zwischen 10° und 20° pro mm betragen. Bevorzugt könnte die Änderung der Winkel in radialer Richtung 15° pro mm betragen. Dieser Drehwinkelgradient hat sich als besonders vorteilhaft erwiesen, wenn ein Sensor in axialer Richtung 3 mm vom Feldkörper beabstandet ist, wobei der Tragkörper aus einem ferromagnetischen Blech gefertigt ist. Bei dem zuvor genannten Drehwinkelgradienten stellt sich eine Erhöhung der Signalintensität um 10% gegenüber einem herkömmlichen Drehwinkelgradienten von 0° ein.

Die Änderung der Winkel in radialer Richtung könnte zwischen 25° und 35° pro mm betragen. Besonders bevorzugt könnte die Änderung der Winkel in radialer Richtung 30° pro mm betragen. Dieser Drehwinkelgradient hat sich als besonders vorteilhaft erwiesen, wenn der Sensor in axialer Richtung etwa 3 mm vom Feldkörper beabstandet ist und der Tragkörper aus einem nicht ferromagnetischen Material gefertigt ist. Es stellt sich hier eine Erhöhung der Signalintensität um 30% gegenüber einem herkömmlichen Drehwinkelgradienten von 0° ein.

Vor diesem Hintergrund könnte die Änderung der Winkel in radialer Richtung zwischen 5° und 60° pro mm betragen. Bevorzugt könnte die Änderung der Winkel in radialer Richtung 60° pro mm betragen. Dieser Drehwinkelgradient hat sich als besonders vorteilhaft erwiesen, wenn ein Sensor in axialer Richtung 1 mm vom Feldkörper beabstandet ist, wobei der Tragkörper aus einem ferromagnetischen Blech gefertigt ist. Bei dem zuvor genannten Drehwinkelgradienten stellt sich eine Erhöhung der Signalintensität um 60% gegenüber einem herkömmlichen Drehwinkelgradienten von 0° ein.

Die Änderung der Winkel in radialer Richtung könnte zwischen 5° und 60° pro mm betragen. Besonders bevorzugt könnte die Änderung der Winkel in radialer Richtung 60° pro mm betragen. Dieser Drehwinkelgradient hat sich als besonders vorteilhaft erwiesen, wenn der Sensor in axialer Richtung etwa 1 mm vom Feldkörper beabstandet ist und der Tragkörper aus einem nicht ferromagnetischen Material gefertigt ist. Es stellt sich hier eine Erhöhung der Signalintensität um 130% gegenüber einem herkömmlichen Drehwinkelgradienten von 0° ein.

Vor diesem Hintergrund könnte der Tragkörper aus einem ferromagnetischen Material gefertigt sein. Bei Verwendung eines ferromagnetischen Materials kann der Drehwinkelgradient relativ niedrig gewählt werden.

Der Tragkörper könnte aus einem nicht ferromagnetischen Material gefertigt sein. Durch ein solches Material können relativ leichte Ringe gefertigt werden.

Der Feldkörper könnte konkav ausgebildet sein. Durch diese konkrete Ausgestaltung ist eine Fokussierung magnetischer Feldlinien in bestimmten Stellen erreichbar.

Der Tragkörper könnte konkav ausgebildet sein. Vor diesem Hintergrund ist konkret denkbar, dass der Tragkörper eine konkave Einbuchtung aufweist, in welche der Feldkörper eingefügt ist. Der Feldkörper bzw. Tragkörper könnte derart konkav ausgebildet sein, dass die konkave Einbuchtung einen parabolischen Verlauf zeigt. Hierdurch wird quasi eine Art Brennpunkt für die magnetischen Feldlinien nach Art eines Parabolspiegels erzeugt.

Eine Anordnung könnte eine rotierbare Welle und einen mit dieser drehfest verbundenen Ring der hier beschriebenen Art aufweisen, wobei der Ring koaxial zu der Welle angeordnet und mit dieser rotierbar ist und wobei ein Sensor vorgesehen ist, welcher magnetische Signale des magnetischen Felds erfasst.

### Kurzbeschreibung der Zeichnung

In der Zeichnung zeigen
- Fig. 1: einen Ring des Stands der Technik, bei welchem sich die Richtungen der Magnetisierungen der Bereiche in radialer Richtung nicht ändern,
- Fig. 2: einen Ring gemäß der Erfindung, bei welchem die einzelnen Bereiche derart magnetisiert sind, dass sich die Richtung ihrer jeweiligen Magnetisierung in radialer Richtung ändert,
- Fig. 3: einen Ring des Stands der Technik, bei welchem sich die Richtungen der Magnetisierungen der Bereiche in axialer Richtung nicht ändern, und
- Fig. 4: einen Ring gemäß der Erfindung, bei welchem die einzelnen Bereiche derart magnetisiert sind, dass sich die Richtung ihrer jeweiligen Magnetisierung in axialer Richtung ändert.

### Ausführung der Erfindung

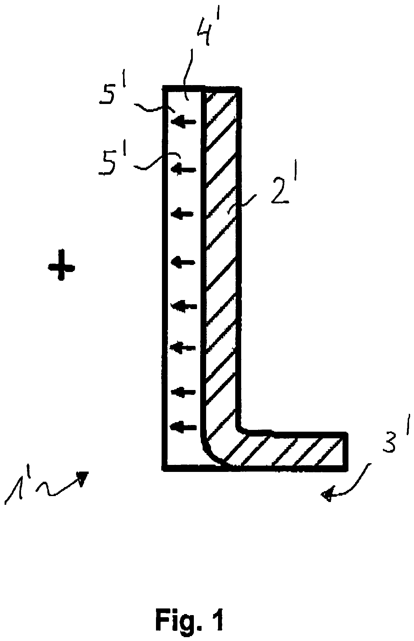

Fig. 1 zeigt einen Ring 1' zur Anordnung auf einem um eine Achse rotierbaren Element, umfassend einen Tragkörper 2', welcher einen Zentraldurchgang 3' umfängt, wobei der Tragkörper 2' mit einem Feldkörper 4' verbunden ist und wobei der Feldkörper 4' einzelne magnetisierte Bereiche 5' aufweist, die gemeinsam ein magnetisches Feld erzeugen.

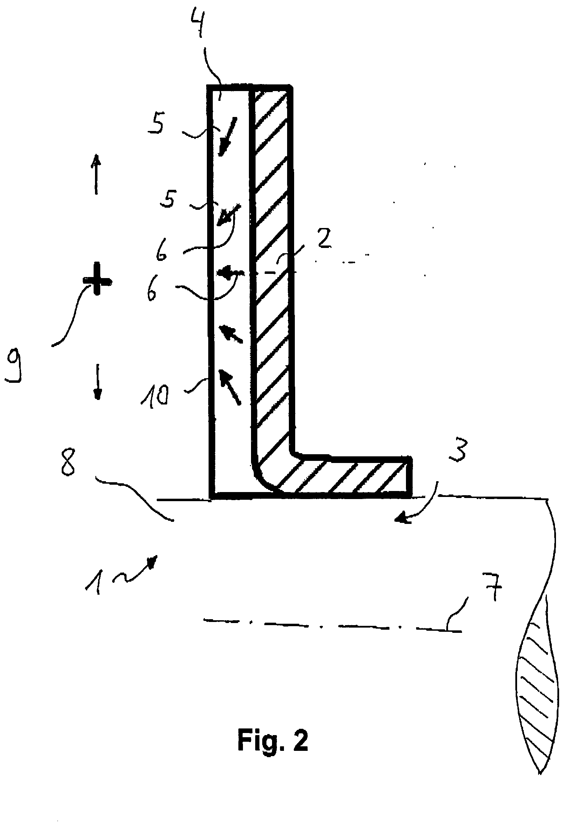

Fig. 2 zeigt einen erfindungsgemäßen Ring 1 zur Anordnung auf einem um eine Achse 7 rotierbaren Element, umfassend einen Tragkörper 2, welcher einen Zentraldurchgang 3 umfängt, wobei der Tragkörper 2 mit einem Feldkörper 4 verbunden ist und wobei der Feldkörper 4 einzelne magnetisierte Bereiche 5 aufweist, die gemeinsam ein magnetisches Feld erzeugen.

Die einzelnen Bereiche 5 sind derart magnetisiert, dass sich die Richtung 6 ihrer jeweiligen Magnetisierung in radialer Richtung ändert. Die Richtung 6 der Magnetisierung ist durch Pfeile dargestellt, welche unterschiedlich zu einer Achse 7 geneigt sind. Die Achse 7 ist die Drehachse einer Welle, auf der der Ring 1, nämlich der Encoderring, drehfest aufgesetzt ist.

Jede Richtung 6 eines Bereichs 5 schließt je einen Winkel mit einer orthogonal zu einer Ringebene orientierten Achse 7 ein.

Zwei in radialer Richtung einander folgende Bereiche 5 weisen Richtungen 6 auf, die unterschiedliche Winkel mit einer orthogonal zu einer Ringebene orientierten Achse 7 einschließen.

Die Änderung der Winkel in radialer Richtung, nämlich der Drehwinkelgradient, beträgt zwischen 5° und 60° pro mm.

Der Tragkörper 2 ist aus einem ferromagnetischen Material gefertigt, nämlich einem ferromagnetischen Blech. Es ist aber auch denkbar, dass der Tragkörper 2 aus einem nicht ferromagnetischen Material gefertigt ist.

Fig. 2 zeigt konkret eine Anordnung, welche eine rotierbare Welle 8 und einen mit dieser drehfest verbundenen Ring 1 umfasst, wobei der Ring 1 koaxial zu der Welle 8 angeordnet und mit dieser rotierbar ist und wobei ein Sensor 9 vorgesehen ist, welcher magnetische Signale des magnetischen Felds erfasst.

Der Sensor 9 ist in einer Leseposition angeordnet, welche in axialer Richtung einen Leseabstand zur Oberfläche 10 des Feldkörpers 4 aufweist. Der Sensor 9 weist überdies in radialer Richtung einen Abstand zur Achse 7 auf.

Der Sensor 9 kann aus der dargestellten radialen Position nach oben oder unten verschoben werden (Pfeile), wobei dann jeweils die erfasste Signalintensität reduziert wird.

Der Leseabstand in axialer Richtung beträgt vorzugsweise 1 mm oder 3 mm, wobei zu jedem Leseabstand und jedem Material, aus dem der Tragkörper 2 gefertigt ist, ein optimaler Drehwinkelgradient ermittelbar ist.

Der Feldkörper 4 ist aus einem Polymer, vorzugsweise aus einem Gummi, gefertigt. Im Polymer sind ferromagnetische oder hartmagnetische Partikel aufgenommen, welche durch ein externes Magnetfeld magnetisiert sind.

Das externe Magnetfeld wird so geführt, dass die Richtungen 6 der einzelnen Bereiche 5 des Feldkörpers 4 ihre jeweilige Orientierung relativ zur Ringebene bzw. zur Achse 7 einnehmen.

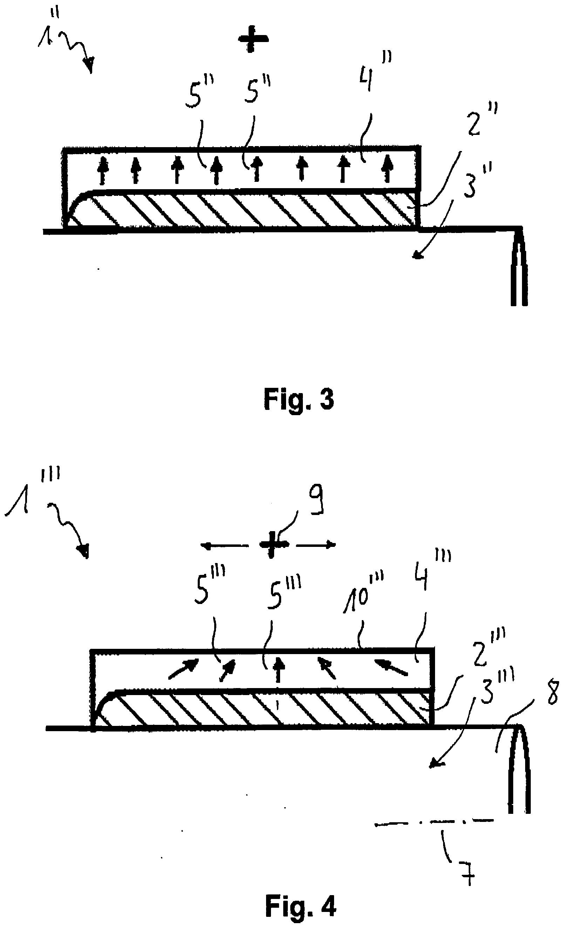

Fig. 3 zeigt einen Ring 1" zur Anordnung auf einem um eine Achse rotierbaren Element, umfassend einen Tragkörper 2", welcher einen Zentraldurchgang 3" umfängt, wobei der Tragkörper 2" mit einem Feldkörper 4" verbunden ist und wobei der Feldkörper 4" einzelne magnetisierte Bereiche 5" aufweist, die gemeinsam ein magnetisches Feld erzeugen.

Fig. 4 zeigt einen erfindungsgemäßen Ring 1'" zur Anordnung auf einem um eine Achse 7 rotierbaren Element, umfassend einen Tragkörper 2"', welcher einen Zentraldurchgang 3'" umfängt, wobei der Tragkörper 2'" mit einem Feldkörper 4'" verbunden ist und wobei der Feldkörper 4'" einzelne magnetisierte Bereiche 5"' aufweist, die gemeinsam ein magnetisches Feld erzeugen.

Die einzelnen Bereiche 5'" sind derart magnetisiert, dass sich die Richtung 6"' ihrer jeweiligen Magnetisierung in axialer Richtung ändert. Die Richtung 6"' der Magnetisierung ist durch Pfeile dargestellt, welche unterschiedlich zu einer Achse 7 geneigt sind.

Die Achse 7 ist die Drehachse einer Welle, auf der der Ring 1'", nämlich der Encoderring, drehfest aufgesetzt ist.

Jede Richtung 6'" eines Bereichs 5'" schließt je einen Winkel mit einer orthogonal zu einer Ringebene orientierten Achse 7 ein.

Zwei in axialer Richtung einander folgende Bereiche 5"' weisen Richtungen 6'" auf, die unterschiedliche Winkel mit einer orthogonal zu einer Ringebene orientierten Achse 7 einschließen.

Die Änderung der Winkel in axialer Richtung, nämlich der Drehwinkelgradient, beträgt zwischen 5° und 60° pro mm.

Der Tragkörper 2'" ist aus einem ferromagnetischen Material gefertigt, nämlich einem ferromagnetischen Blech. Es ist aber auch denkbar, dass der Tragkörper 2'" aus einem nicht ferromagnetischen Material gefertigt ist.

Fig. 4 zeigt konkret eine Anordnung, welche eine rotierbare Welle 8 und einen mit dieser drehfest verbundenen Ring 1'" umfasst, wobei der Ring 1'" koaxial zu der Welle 8 angeordnet und mit dieser rotierbar ist und wobei ein Sensor 9 vorgesehen ist, welcher magnetische Signale des magnetischen Felds erfasst.

Der Sensor 9 ist in einer Leseposition angeordnet, welche in radialer Richtung einen Leseabstand zur Oberfläche 10'" des Feldkörpers 4'" aufweist.

Der Sensor 9 kann aus der dargestellten axialen Position nach links oder rechts verschoben werden (Pfeile), wobei dann die erfasste Signalintensität reduziert wird.

Der Feldkörper 4'" ist aus einem Polymer, vorzugsweise aus einem Gummi, gefertigt. Im Polymer sind ferromagnetische oder hartmagnetische Partikel aufgenommen, welche durch ein externes Magnetfeld magnetisiert sind.

Das externe Magnetfeld wird so geführt, dass die Richtungen 6'" der einzelnen Bereiche 5'" des Feldkörpers 4'" ihre jeweilige Orientierung relativ zur Ringebene bzw. zur Achse 7 einnehmen.

## Patentansprüche

1. Ring (1, 1"') zur Anordnung auf einem um eine Achse (7) rotierbaren Element, umfassend einen Tragkörper (2, 2"'), welcher einen Zentraldurchgang (3, 3"') umfängt, wobei der Tragkörper (2, 2"') mit einem Feldkörper (4, 4'") verbunden ist und wobei der Feldkörper (4, 4"') einzelne magnetisierte Bereiche (5, 5"') aufweist, die gemeinsam ein magnetisches Feld erzeugen,
**dadurch gekennzeichnet, dass** die einzelnen Bereiche (5, 5'") derart magnetisiert sind, dass sich die Richtung (6, 6"') ihrer jeweiligen Magnetisierung in radialer oder in axialer Richtung ändert.

2. Ring nach Anspruch 1, **dadurch gekennzeichnet, dass** jede Richtung (6, 6"') eines Bereichs (5, 5"') je einen Winkel mit einer orthogonal zu einer Ringebene orientierten Achse (7) einschließt.

3. Ring nach Anspruch 1 oder 2, **dadurch gekennzeichnet, dass** zwei in radialer oder in axialer Richtung einander folgende Bereiche (5, 5"') Richtungen (6, 6'") der Magnetisierung aufweisen, die unterschiedliche Winkel mit einer orthogonal zu einer Ringebene orientierten Achse (7) einschließen.

4. Ring nach Anspruch 2 oder 3, **dadurch gekennzeichnet, dass** die Änderung der Winkel in radialer oder in axialer Richtung zwischen 5° und 60° pro mm beträgt.

5. Ring nach Anspruch **4**, **dadurch gekennzeichnet, dass** die Änderung der Winkel in radialer oder in axialer Richtung zwischen 10° und 20° pro mm beträgt.

6. Ring nach Anspruch **4**, **dadurch gekennzeichnet, dass** die Änderung der Winkel in radialer oder in axialer Richtung zwischen 25° und 35° pro mm beträgt.

7. Ring nach einem der Ansprüche 1 bis 6, **dadurch gekennzeichnet, dass** der Tragkörper (2,2'") aus einem ferromagnetischen Material gefertigt ist.

8. Ring nach einem der Ansprüche 1 bis 6, **dadurch gekennzeichnet, dass** der Tragkörper (2,2'") aus einem nicht ferromagnetischen Material gefertigt ist.

9. Ring nach einem der Ansprüche 1 bis 8, **dadurch gekennzeichnet, dass** der Feldkörper konkav ausgebildet ist.

10. Ring nach einem der Ansprüche 1 bis 9, **dadurch gekennzeichnet, dass** der Tragkörper konkav ausgebildet ist.

11. Anordnung, umfassend eine rotierbare Welle (8) und einen mit dieser drehfest verbundenen Ring (1,1'") nach einem der voranstehenden Ansprüche, wobei der Ring (1,1'") koaxial zu der Welle (8) angeordnet und mit dieser rotierbar ist und wobei ein Sensor (9) vorgesehen ist, welcher magnetische Signale des magnetischen Felds erfasst.
